# EUROPÄISCHE PATENTSCHRIFT

(11) **EP 2 846 954 B1**
(45) Veröffentlichungstag und Bekanntmachung des Hinweises auf die Patenterteilung: **09.01.2019**
(21) Anmeldenummer: 13719100.3
(22) Anmeldetag: 26.04.2013
(51) Int. Cl.: B23C 5/20, B23C 5/10, B23C 5/06

(54) **WENDESCHNEIDPLATTE FÜR ECKFRÄSER UND ECKFRÄSER MIT AUFNAHMEAUSSPARUNGEN FÜR WENDESCHNEIDPLATTEN**
INDEXABLE INSERT FOR SHOULDER MILLING CUTTER AND SHOULDER MILLING CUTTER WITH MOUNTING CUTOUTS FOR INDEXABLE INSERTS
PLAQUETTE AMOVIBLE POUR FRAISE À DRESSER ET FRAISE À DRESSER COMPRENANT DES ÉVIDEMENTS DE LOGEMENT POUR PLAQUETTES AMOVIBLES

(30) Priorität: 09.05.2012 DE 102012104082
(43) Veröffentlichungstag der Anmeldung: 18.03.2015
(73) Patentinhaber: Walter AG, 72072 Tübingen (DE)
(72) Erfinder: DAUB, Jürgen, 72108 Rottenburg (DE)
(74) Vertreter: WSL Patentanwälte Partnerschaft mbB
(86) Internationale Anmeldenummer: PCT/EP2013/058753
(87) Internationale Veröffentlichungsnummer: WO 2013/167400

(56) Entgegenhaltungen:
- EP-A2- 1 952 925
- EP-A2- 1 985 394
- WO-A1-03/101655
- WO-A1-2004/048021
- WO-A1-2007/101281
- WO-A1-2012/043579
- DE-A1- 1 502 030
- US-A- 5 071 291
- US-A1- 2013 051 936

## Beschreibung

Die vorliegende Erfindung betrifft eine Wendeschneidplatte gemäß dem Oberbegriff des Patentanspruchs 1, mit einer Oberseite und einer Unterseite, welche durch eine aus mehreren Teilflächen bestehende, umlaufende Seitenfläche miteinander verbunden sind, wobei mindestens einige der Schnittlinien zwischen den Teilflächen und der Ober- bzw. der Unterseite zueinander äquivalente Schneidkanten bilden und die Wendeschneidplatte jeweils in der Draufsicht auf die Ober- und die Unterseite die Form eines nicht rechtwinkligen Parallelogramms mit nahezu rhombischer Grundform und eine gedachte Zwischenebene hat, welche durch einen Rhombus aufgespannt wird, dessen Seiten im Abstand zu Ober- und Unterseite entlang der umlaufenden Seitenfläche in einer Ebene derart verlaufen, dass jede der äquivalenten Schneidkanten der Oberseite und Unterseite dieselbe Variation des Abstandes und Winkels zu der von dem gedachten Rhombus aufgespannten Zwischenebene hat, wobei zwei einander diagonal gegenüber liegende Ecken der Oberseite und zwei diagonal gegenüber liegenden Ecken der Unterseite jeweils einen größeren Abstand von der Zwischenebene haben als die jeweils dazwischen liegenden einander diagonal gegenüber liegenden Ecken der Ober- und der Unterseite und dass die einander diagonal gegenüberliegenden Ecken der Oberseite ebenso wie die einander diagonal gegenüberliegenden Ecken der Unterseite parallel zur Zwischenebene Z und in der Draufsicht auf die Zwischenebene jeweils weg von der zugehörigen Diagonalen des die Zwischenebene aufspannenden Rhombus in zueinander entgegengesetzte Richtungen verschoben sind und wobei der die Zwischenebene definierende Rhombus, der von entlang der umlaufenden Seitenfläche verlaufenden Seiten aufgespannt wird, nicht rechtwinklig ist und vorzugsweise an seinen spitzwinkligen Ecken einen Winkel zwischen 60° und 88° aufweist.

Ebenso betrifft die vorliegende Erfindung auch einen Eckfräser gemäß dem Oberbegriff des Patentanspruchs 12, mit mehreren Aufnahmeaussparungen für Wendeschneidplatten, die jeweils mindestens 3 Sitzflächen aufweisen, von denen eine erste Sitzfläche eine Abstützung einer Wendeschneidplatte überwiegend in radialer Richtung, eine zweite Sitzfläche eine Abstützung in überwiegend in axialer Richtung und eine dritte Sitzfläche eine Abstützung der Wendeschneidplatte überwiegend in tangentialer Richtung bewirkt.

Eine Wendeschneidplatte mit in der Draufsicht rhombischer Grundform, bei welcher diagonal gegenüberliegende Ecken jeweils den gleichen Abstand zu einer gedachten Zwischenebene haben, wobei die Ecken jeweils paarweise einen kleineren und einen größeren Abstand zu dieser Zwischenebene aufweisen, ist aus der DE 103 12 922 A1 bekannt.
Eine weitere Wendeschneidplatte, auf welche sich Merkmale des Oberbegriffs des Anspruchs 1 lesen lassen, ist aus dem US-Patent 4, 074,949 bekannt. Diese Wendeschneidplatte wird hergestellt durch diagonales Einschleifen einer Nut in die Seitenflächen einer quaderförmigen Platte. Ausgehend von einer durch ein Quadrat oder Rechteck aufgespannten Zwischenebene könnte man sich eine derartige Platte auch so vorstellen, dass die Oberseite entlang einer Diagonalen gestreckt und entlang der anderen Diagonalen gestaucht wird und dass analog die Unterseite entlang der jeweils anderen Diagonale gestreckt bzw. gestaucht wird.
Oberseite und Unterseite dieser bekannten Wendeschneidplatte sind zueinander parallel, und die Wendeschneidplatte ist im Wesentlichen für einen tangentialen Vorschub gedacht, d. h. die rhombischen Hauptflächen sind keine Spanflächen sondern Freiflächen, während die umlaufenden Seitenflächen mindestens teilweise Spanflächen sind.

Im Falle der DE 103 12 922 A1, die den Oberbegriff des Patentanspruchs 12 offenbart, ist die Herstellung passender Anlageflächen an den Wendeschneidplatten und einem entsprechenden Werkzeug, wie z. B. einem Eckfräser, relativ schwierig, da durch die diagonale Anhebung und Absenkung der Ecken, schraubenförmig verdrillte Ober- und Unterseiten entstehen, so dass es schwierig ist, entsprechende Wendeschneidplatten gegenüber der jeweils aktiven Schneidkante großflächig abzustützen, auch wenn zentrale, ebene Vertiefungen vorgesehen sind. Außerdem führt die in der Draufsicht rechteckige Form und die symmetrische Ausbildung von Vorder- und Rückseite dazu, dass es schwierig wird bei der Verwendung an einem Eckfräser sowohl axial als auch radial einen ausreichenden Freiwinkel einzustellen, was zur einer Begrenzung des maximal möglichen Vorschubs führt oder über die diagonale Verzerrung der Oberfläche eine stark eingezogene Spanfläche erfordert, was wiederum die Schneidkanten schwächt, wenn man einen positiver radialer (und auch einen positiver axialen) Spanwinkel beibehalten möchte. Eine Einstellung des Freiwinkels und des Spanwinkels ist nur innerhalb relativ kleiner Winkelbereiche möglich, und die erzielbaren Freiwinkel und positiven Spanwinkel sind relativ klein.

Die WO 2012/043579 A1 offenbart eine Wendeschneidplatte gemäß dem Oberbegriff des Patentanspruchs 1, welche eine Mehrzahl von Schneidabschnitten aufweist, die an den Übergängen zwischen der jeweiligen Kante und einer Umfangsfläche ausgebildet sind. Jeder Schneidabschnitt weist eine erste Schneidkante und eine zweite Schneidkante auf. Jede Kante weist alternierend eine erste Ecke und eine zweite Ecke mit unterschiedlichen Innenwinkeln auf. Der Innenwinkel der ersten Ecke ist kleiner als der Innenwinkel der zweiten Ecke. Jede erste Schneidkante weist einen Abschnitt auf, der sich mit zunehmendem Abstand von der ersten Ecke einer Mittelebene annähert. Ein erster Seitabschnitt, der sich jeweils von einer ersten Schneidkante aus zu der Umfangsfläche erstreckt, bildet einen stumpfen Innenwinkel mit einer sich parallel zur Mittelebene erstreckenden Ebene, welche die erste Schneidkante schneidet, während ein zweiter Seitabschnitt, der sich jeweils von einer zweiten Schneidkante aus zu der Umfangsfläche erstreckt, einen spitzen Innenwinkel mit einer sich parallel zur Mittelebene erstreckenden Ebene bildet, die die zweite Schneidkante schneidet.

In der WO 2007/101281 A1 wird ein Fräswerkzeug beschrieben, insbesondere zur Bearbeitung von Kurbel- und Nockenwellen, welches bei hoher Abspanleistung einen ruhigen Lauf mit verminderter Antriebsleistungsaufnahme besitzt. Das Fräswerkzeug ist zur Aufnahme einer Wendeschneidplatte vorgesehen, welche zumindest einseitig eine zentrisch symmetrische Schneidkantenkontur aufweist, wobei in Draufsicht die Spanfläche eine konkave Keil- und Muldenform mit einem Winkel α des Keil- oder Muldengrundes zu einer Anlagefläche zur Festlegung an ein drehbares Werkzeug besitzt und an der Öffnungsseite des Winkels α die durch die Anlage- bzw. Seitenfläche und die Spanfläche gebildete Schneidkante gerundet ist. Das entsprechende Fräswerkzeug weist mehrere Aufnahmeaussparungen für Wendeschneidplatten mit Stützflächen auf.

Die EP 1 952 925 A2 betrifft ein Werkzeug für die spanabhebende Bearbeitung mit einem Grundkörper und einem Schneideinsatz, welcher eine obere Seite und eine untere Seite umfasst, zwischen welchen sich eine zentrale Achse und, neben einer Schneidkante, eine umlaufende Freifläche erstrecken, wobei der Grundkörper eine erste Anschlussfläche, die dafür ausgelegt ist, den Schneideinsatz zu verriegeln bzw. zu sichern, und Eingriffseinrichtungen hat, die durch Abstützflanken begrenzt sind, welche in einer gemeinsamen Bodenebene und relativ zu dieser geneigt angeordnet sind, wobei der Schneideinsatz eine zweite Anschlussfläche hat, die in der Unterseite ausgebildet ist und eine Eingriffseinrichtung hat, welche durch Kontaktflanken begrenzt ist, welche in einer gemeinsamen Grundebene und relativ zu dieser geneigt angeordnet sind, wobei zwischen zwei miteinander zusammenwirkenden Abstützflanken, die gemeinsam einen V-förmigen, divergierenden Sitz in dem Grundkörper begrenzen, eine erste in der Bodenebene liegt und die zweite auf einem Niveau oberhalb derselben liegt, und wobei von den zwei miteinander zusammenwirkenden Kontaktflanken, die gemeinsam einen V-förmigen, konvergierenden Keilabschnitt des Schneideinsatzes begrenzen, eine erste in der Grundebene liegt, während die zweite ein Teil der Freifläche ist, die auf einem Niveau oberhalb der Grundebene liegt und gegen die zweite Abstützflanke gedrückt wird.

In der WO 03/101655 A1 wird ein Fräswerkzeug offenbart, welches einen Schneidkörper aufweist mit wenigstens einer Einsatztasche, in welcher wenigstens ein Schneideinsatz festgehalten wird, wobei die wenigstens eine Einsatztasche benachbarte Seiten- und Rückwände im Allgemeinen quer zu einer Basis aufweist, wobei die Rückwand im Allgemeinen konvex ist, die Seitenwand mit einer axialen Lokalisierungsfläche versehen ist, die an eine gegebene Nebenseitenfläche des wenigstens einen Schneideinsatzes bei einem gegebenen axialen Anlagebereich anliegt, die Rückwand mit zwei vorspringenden tangentialen Lokalisierungsflächen versehen ist, die sich auf jeder Seite eines mittigen Bereichs der Rückwand befinden, wobei eine erste von den zwei tangentialen Lokalisierungsflächen an einer ersten tangentialen Anlagefläche anliegt, die sich auf der Anlagefläche des wenigstens einen Schneideinsatzes befindet, und eine zweite von den zwei tangentialen Lokalisierungsflächen an einer zweiten tangentialen Anlagefläche anliegt, die sich auf der Anlagefläche befindet.

Gegenüber diesem Stand der Technik liegt der vorliegenden Erfindung die Aufgabe zugrunde, eine Wendeschneidplatte zu schaffen, welche vier äquivalente, stabile Hauptschneidkanten bereitstellt, einen ausreichenden Freiwinkel der stirnseitigen Nebenschneidkante bewirkt und an der Hauptschneidkante einen Keilwinkel von weniger als 90° aufweist.

Diese Aufgabe wird durch eine Wendeschneidplatte mit den Merkmalen des Anspruchs 1 gelöst. Gemäß der vorliegenden Erfindung haben zwei einander diagonal gegenüber liegende Ecken der Oberseite und zwei diagonal gegenüber liegenden Ecken der Unterseite jeweils einen größeren Abstand von der Zwischenebene als die jeweils dazwischen liegenden einander diagonal gegenüber liegenden Ecken der Ober- und der Unterseite und die einander diagonal gegenüberliegenden Ecken der Oberseite ebenso wie die einander diagonal gegenüberliegenden Ecken der Unterseite sind parallel zur Zwischenebene Z und jeweils weg von der zugehörigen Diagonalen des die Zwischenebene aufspannenden Rhombus in zueinander entgegengesetzten Richtungen verschoben. Zudem werden die Oberseite und die Unterseite jeweils durch zwei im Wesentlichen dreieckige Flächen gebildet, deren eine Spitze jeweils mit der spitzwinkligen Ecke der parallelogrammförmigen Ober- bzw. Unterseite zusammenfällt, wobei die dieser Spitze gegenüber liegenden Seiten der dreieckigen Flächen parallel verlaufen und sich in etwa zwischen den stumpfwinkligen Ecken der Parallelogrammform erstrecken und wobei diese Dreiecksflächen einen Winkel zwischen etwa 110 und 165°, vorzugsweise zwischen 135 und 155° einschließen.

Die Geometrie der erfindungsgemäßen Wendeschneidplatte kann man sich am besten folgendermaßen vorstellen. Ausgehend von einer in der Draufsicht rhombischen Platte gleichmäßiger Dicke vergrößert man zunächst die Dicke der Platte an zwei diagonal gegenüberliegenden Ecken, und zwar gleichmäßig zur Oberseite wie zur Unterseite hin. Die Oberseite und Unterseite bestehen dann jeweils aus zwei zueinander geneigten Dreiecksflächen.

Zusätzlich werden dann die diagonal gegenüberliegenden Ecken dieser in der Draufsicht zunächst noch rhombischen Platte in entgegengesetzte Richtungen bezüglich der Diagonalen des Rhombus verschoben, und jeweils benachbarte Ecken des Rhombus werden bezüglich ihrer zugehörigen Diagonalen ebenfalls in entgegengesetzte Richtung verschoben. Dadurch entsteht aus der rhombischen Grundform der Ober- und Unterseiten in der Draufsicht ein nicht rechtwinkliges Parallelogramm. Die zur selben Ecke der rhombischen Grundform gehörenden Ecken von Ober- und Unterseite werden ihrerseits jeweils in entgegengesetzte Richtung bezüglich der Diagonalen des Rhombus verschoben. Die seitliche Verschiebung der Ecken von Ober- und Unterseite parallel zu Zwischenebene und relativ zu der Ecke des Rhombus, der die Zwischenebene definiert, liegt vorzugsweise bei etwa 5% bis 15% der Dicke der Wendeschneidplatte im Bereich der entsprechenden Ecke.

Auf diese Weise entstehen in der Draufsicht längere und kürzere Kanten an den Schnittlinien zwischen Seitenfläche und Ober- bzw. Unterseite, wobei vorzugsweise die längeren Seiten Hauptschneidkanten definieren und die kürzeren Seiten Nebenschneidkanten sind, d.h. bei der Verwendung an einem Eckfräser werden die Hauptschneidkanten parallel zur Achse des Fräsers ausgerichtet, während die Nebenschneidkanten gegenüber einer Ebene senkrecht zur Achse des Fräsers unter einem Freiwinkel leicht rückwärts geneigt verlaufen. Mindestens die 4 Hauptschneidkanten sind jeweils gleich ausgebildet und durch Drehen und Wenden der Wendeschneidplatte austauschbar und derartige gleich ausgestaltete und austauschbare Kanten werden im Sinne der vorliegenden Erfindung als "äquivalente" Kanten bzw. Schneidkanten bezeichnet. Dies schließt auch die Schneidecken am Übergang zu einer zugehörigen Nebenschneidkante ein.

Mit "Draufsicht" wird in diesem Zusammenhang immer eine Ansicht senkrecht auf die gedachte Zwischenebene bezeichnet.

Gleichzeitig weisen Haupt- und Nebenschneidkanten und insbesondere auch die Schneidecke am Übergang von der Haupt- zur Nebenschneidkante einen Keilwinkel von weniger als 90° auf und können somit derart ausgerichtet werden, dass sich bei der Verwendung an einem Eckfräser sowohl in Umfangsrichtung als auch axial eine positive Schneidengeometrie ergibt. Die Nebenschneidkanten müssen allerdings nicht identisch ausgebildet sein und auch keine positive Schneidengeometrie haben, wenn sie aufgrund eines entsprechend großen Freiwinkels nicht mit dem Werkstück in Eingriff kommen können. Dies gilt insbesondere bei der Verwendung an Eckfräsern, wenn der spitze Winkel des von Ober- und Unterseite in der Draufsicht gebildeten Parallelogramms deutlich kleiner als 90° ist, also z. B. weniger als 88° beträgt, wobei der tatsächlich zwischen Haupt und Nebenschneidkante eingeschlossene Winkel noch deutlich kleiner ist, da die von den Schneidkanten begrenzte Oberseite relativ zu der Zwischenebene geneigt ist und die Draufsicht auf die Oberseite einer Projektion der Schneidkanten auf die Zwischenebene entspricht.
Außerdem ergibt sich auch bei achsparalleler Ausrichtung der Hauptschneidkante an einem Eckfräser immer ein ausreichender Freiwinkel der Nebenschneidkante, die mit der Hauptschneidkante (aufgrund der spitzwinkligen Ausbildung des Parallelogramms, welches die Kanten der Wendeschneidplatte in der Draufsicht aufspannen) einen Winkel von weniger als 90 ° einschließt, unabhängig von dem Freiwinkel an der Hauptschneidkante.
Weiterhin können die sich in einer Draufsicht ergebenden dreieckigen Teilflächen von Oberseite und Unterseite als ebene Flächen ausgebildet sein und bieten damit eine einfache, relativ große und sichere Auflagefläche an einem Sitz eines Eckfräsers oder dergleichen, wenn die Wendeschneidplatte so montiert wird, dass eine Schneidkante auf der jeweils gegenüberliegenden Seite aktiv ist.
Die insgesamt acht Schnittlinien der vier umlaufenden Teilflächen jeweils mit Oberseite und Unterseite bilden dabei acht Kanten, von welchen in einer Ausführungsform die vier längeren Kanten Hauptschneidkanten bilden und die vier verbleibenden Kanten Nebenschneidkanten sein könnten. Diese Kanten sind derart angeordnet, dass eine Hauptschneidkante der Oberseite jeweils einer Nebenschneidkante der Unterseite gegenüberliegt und umgekehrt.
Die vorzugsweise ebenen dreieckigen Teilflächen der Oberseite und Unterseite bilden großflächige Anlageflächen an einem entsprechenden Sitz eines Fräsers, und bieten eine gute Unterstützung für eine auf der gegenüber liegenden Seite angeordnete Hauptschneidkante. Weitere Auflageflächen werden gebildet durch jeweils mindestens zwei der Teilflächen der umlaufenden Seitenfläche.
Der die Zwischenebene definierende Rhombus, der von den umlaufenden Seitenflächen aufgespannt wird, ist nicht rechtwinklig und weist vorzugsweise an seinen spitzwinkligen Ecken einen Winkel zwischen 60 und 88° auf. In einer Ausführungsform sind in einer Draufsicht auf die Ober- bzw. Unterseite zwei diagonal gegenüberliegende Ecken bezüglich der zugehörigen Diagonalen des Rhombus im Uhrzeigersinn verschoben, und die dazwischen liegenden Ecken sind bezüglich ihrer zugehörigen Diagonalen entgegen dem Uhrzeigersinn verschoben, wodurch sich die beschriebene Parallelogrammform ergibt.

Die Schneidecken der Wendeschneidplatte, welche an den spitzwinkligen Ecken des von Ober- und Unterseite aufgespannten Parallelogramms angeordnet sind, haben jeweils den größeren Abstand zur Zwischenebene. Dabei beträgt die (minimale) Dicke der Schneidplatte zwischen Ober- und Unterseite im Bereich der stumpfwinkligen Ecken zwischen 40% und 70%, und bevorzugt in etwa die Hälfte der (maximalen) Dicke der Wendeschneidplatte an den spitzwinkligen Ecken des Parallelogramms.

Wie bereits erwähnt, werden Ober- und Unterseite jeweils durch zwei im Wesentlichen dreieckige Flächen gebildet, deren eine Spitze jeweils mit der spitzwinkligen Ecke der parallelogrammförmigen Ober- bzw. Unterseite zusammenfällt, wobei die dieser Spitze gegenüberliegenden Seiten der dreieckigen Flächen parallel verlaufen und sich in etwa zwischen den stumpfwinkligen Ecken erstrecken und wobei diese Dreiecksflächen einen Winkel zwischen etwa 110° und 165°, vorzugsweise zwischen 135° und 155° einschließen.

Dieser Neigungswinkel der Teilflächen der Oberseite und Unterseite führt effektiv zu einem senkrecht zu den Schneidkanten gemessenen Keilwinkel am Übergang zu den Seitenflächen, der weniger als 90° beträgt.

Entlang ihrer parallelen Seiten können die beiden dreieckigen Teilflächen der Oberseite und Unterseite noch durch eine schmale, streifenförmige ebene Fläche oder eine Übergangsrundung mit einem entsprechenden Radius getrennt sein, die zwischen den parallelen Seiten der Dreiecksflächen und parallel zu der Zwischenebene verläuft.

Wie bereits erwähnt, besteht die umlaufende Seitenfläche der Wendeschneidplatte im Wesentlichen aus vier Teilflächen, wobei jede der Teilflächen entlang einer Hauptschneidkante einen Saum, d. h. eine sich nur über einen schneidkantennahen Abschnitt der Teilfläche erstreckende Freifläche aufweist, die einen noch kleineren Keilwinkel mit der Ober- bzw. Unterseite einschließt, als der verbleibende Abschnitt der Teilfläche.

Im Übrigen sind die Teilflächen ebenso wie die Dreiecksflächen der Ober- und der Unterseite jeweils nicht zueinander parallele, Flächen, die eben sein können, teilweise und insbesondere im Bereich saumartigen Streifens einer Freifläche entlang einer Schneidkante aber auch leicht ballig ausgebildet sein können.

Die Eckbereiche der rhombischen Grundform bzw. auch von Ober- und Unterseite können jeweils abgeflacht oder gerundet sein, wobei Ober- und Unterseite je zwei Schneidkanten aufweisen, von denen eine erste sich zwischen einer stumpfwinkligen und einer spitzwinkligen Ecke der Wendeschneidplatte erstreckt und die zweite Hauptschneidkante sich zwischen den hierzu diagonal gegenüberliegenden Ecken erstreckt. Es versteht sich, dass durch derartige Abrundungen oder Abflachungen der Ecken der Wendeschneidplatte entlang der Seitenfläche weitere, kleinere Teilflächen gebildet werden, die aber für die Grundgeometrie, wie sie oben beschrieben wurde, keine wesentliche Rolle spielen.
Wenn, ausgehend von der rhombischen Grundform, die Verschiebung diagonal gegenüberliegender Ecken und auch der derselben Rhombusecke zugeordneten Ecken von Ober- und Unterseite paarweise jeweils in entgegengesetzten Richtungen und um den gleichen Betrag erfolgt, erhält man im Ergebnis eine Wendeschneidplatte, die punktsymmetrisch ist.
Außerdem ist die erfindungsgemäße Wendeschneidplatte symmetrisch bezüglich Drehungen um 180° jeweils um beide Diagonalen des Rhombus der gedachten Zwischenebene und auch bezüglich einer zentralen Achse durch den Rhombus senkrecht zur Zwischenebene. Die erfindungsgemäße Wendeschneidplatte hat jedoch keinerlei Spiegelsymmetrie bezüglich irgendeiner Ebene und auch keine Symmetrie bezüglich irgendeiner Drehung, die kein ganzzahliges Vielfaches von 180° ist. Die Summe der vorstehenden Symmetriebedingungen ist eine alternative Möglichkeit, die erfindungsgemäße Wendeschneidplatte zu charakterisieren.

Hinsichtlich eines Eckfräsers wird die der Erfindung zugrundeliegende Aufgabe durch einen Eckfräser gemäß dem Patentanspruch 12 gelöst. Der Eckfräser weist mehrere Aufnahmeaussparungen für Wendeschneidplatten auf, die jeweils mindestens drei Sitzflächen aufweisen, von denen eine erste Sitzfläche eine Abstützung einer Wendeschneidplatte überwiegend in radialer Richtung, eine zweite Sitzfläche eine Abstützung in überwiegend axialer Richtung und eine dritte Sitzfläche eine Abstützung der Wendeschneidplatte überwiegend in tangentialer Richtung bewirkt, wobei die dritte Sitzfläche aus mindestens zwei zueinander abgewinkelten Teilflächen besteht, von denen die eine mit der Achse des Eckfräsers einen positiven axialen Winkel und die andere einen negativen axialen Winkel einschließt, die Teilflächen in etwa dreieckig sind und in der tangentialen Draufsicht gemeinsam eine Parallelogrammform mit annähernd rhombischer Grundform definieren, indem zwei ihrer Seiten parallel nebeneinander verlaufen und die Dreieckflächen durch eine schmale, längliche Planfläche getrennt sind, die in etwa achsparallel ausgerichtet ist und deren Längsseiten mit den parallelen Seiten der Dreiecksflächen zusammenfallen.
Die Begriffe "positiv" und "negativ" sind hier willkürlich gewählt und sollen lediglich zum Ausdruck bringen, dass die eine Fläche bezüglich der Achse in einer ersten Richtung geneigt ist und die andere Fläche bezüglich der Achse in entgegengesetzter Richtung geneigt ist.

Die Teilflächen der dritten Sitzfläche sind in etwa dreieckig und definieren in der tangentialen Draufsicht auf den Fräser gemeinsam eine Parallelogrammform mit annähernd rhombischer Grundform, indem zwei der Seiten der dreieckigen Teilflächen parallel verlaufen.

Weiterhin sind die Dreiecksflächen der dritten Sitzfläche erfindungsgemäß durch eine schmale, längliche Planfläche getrennt, die ebenfalls einen Teil der dritten Sitzfläche bildet und die in etwa achsparallel ausgerichtet ist und deren Längsseiten mit den parallelen Seiten der Dreiecksflächen zusammenfallen.

Der Eckfräser hat vorzugsweise mindestens eines oder eine beliebige Kombination mehrerer der nachfolgend aufgelisteten Merkmale:
Bezüglich einer Ebene senkrecht zur Achse schließen die genannten Teilflächen der dritten Sitzfläche jeweils entgegengesetzte Winkel mit dieser radialen Ebene ein.

Die dreieckigen Teilflächen des Sitzes schließen einen Winkel zwischen etwa 110° und 165° vorzugsweise zwischen 135 und 155° auf der der Wendeschneidplatte abgewandten Seite miteinander ein.

Die parallelen Seiten der beiden Dreiecksflächen verlaufen in etwa in einer die Fräserachse enthaltenden Ebene und sind unter einem Winkel zwischen 30° und 60° zur Fräserachse geneigt.

Eine Befestigungsbohrung ist zwischen den Dreiecksflächen im Bereich der parallelen Dreiecksseiten bzw. der Planfläche vorgesehen, wobei die Achse der Bohrung sich annähernd parallel zur tangentialen Richtung (bezüglich des Fräsers) in die dritte Sitzfläche hinein erstreckt.

Schließlich ist eine Ausführungsform des Eckfräsers bevorzugt, die mit mehreren Wendeschneidplatten nach einem der Ansprüche 1 bis 19 ausgestattet ist.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
Fig. 1 schematisch den geometrischen Grundaufbau einer erfindungsgemäßen Wendeschneidplatte in einer Draufsicht auf Ober- bzw. Unterseite,
Fig. 2 eine Ausführungsform einer erfindungsgemäßen Wendeschneidplatte in der Draufsicht von oben oder unten,
Fig. 3 eine Seitenansicht der Wendeschneidplatte aus Fig. 2,
Fig. 4 eine Überlagerung von Oberseite und Unterseite einer erfindungsgemäßen Wendeschneidplatte in einer gegenüber Fig. 1 um 90° verdrehten Position,
Fig. 5 einen Schnitt durch die Wendeschneidplatte der Fig. 4 entsprechend der Schnittlinie V-V,
Fig. 6 eine perspektivische Ansicht eines mit Wendeschneidplatten gemäß Fig. 2 ausgestatteten Eckfräsers,
Figuren 6a - 6c verschiedene Ansichten eines mit Wendeschneidplatten gemäß Fig. 2 ausgestatteten Eckfräsers,
Fig. 7 die perspektivische Ansicht eines Eckfräsers gemäß der Erfindung ohne Wendeschneidplatten und
Fig. 8 ein Detail aus Fig. 7

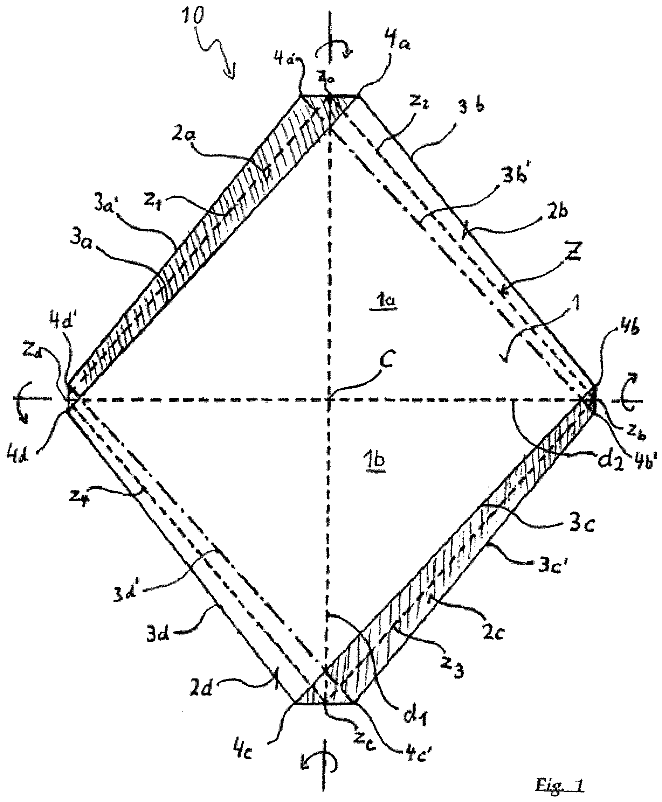

In Figur 1 erkennt man schematisch die Grundform einer erfindungsgemäßen Wendeschneidplatte in einer transparenten Darstellung, konkret in einer Draufsicht auf die Oberseite (die mit einer Draufsicht auf die Unterseite identisch ist). Alle sichtbaren Kanten der geometrischen Grundform sind mit durchgezogenen Linien wiedergegeben, während die verdeckten, aber aufgrund der transparenten Darstellung hier sichtbar gemachten Kanten strichpunktiert wiedergegeben sind. Eine gestrichelte Linie zeigt schließlich die Umrisse eines in die Wendeschneidplatte einbeschriebenen Rhombus R_{z}, der eine Zwischenebene Z definiert, die man sich hier als mit der Papierebene zusammenfallend vorstellen kann.

Der Rhombus wird aufgespannt durch seine Ecken zₐ bis z_{d} bzw. durch vier gleichlange Seiten z₁, z₂, z₃ und z₄, die sich entlang der Seitenflächen 2a, 2b, 2c und 2d der Wendeschneidplatte erstrecken und in einer gemeinsamen Ebene liegen, die hier als Zwischenebene Z bezeichnet wird.

Die Oberseite 1 dieser Grundgeometrie der Wendeschneidplatte wird gebildet von zwei dreieckigen Flächen 1a und 1b, welche durch die Ecken 4a, 4b und 4d bzw. 4c, 4b und 4d aufgespannt werden. Diese Dreiecksflächen der Oberseite 1 einschließlich der sie begrenzenden Kanten 3a, 3b, 3c, 3c liegen oberhalb der Papierebene. Die (nicht eingezeichnete) Verbindung der Ecken 4b und 4d bildet eine gemeinsame Seite der Dreiecksflächen 1a und 1b.

Die Unterseite wird analog durch zwei identische Dreiecksflächen aufgespannt, welche begrenzt werden durch die Ecken 4a', 4b' und 4d' bzw. durch 4c', 4b' und 4d'. Die Unterseite und die sie begrenzenden Kanten 3a', 3b', 3c' und 3d' liegen unterhalb der Papierebene.

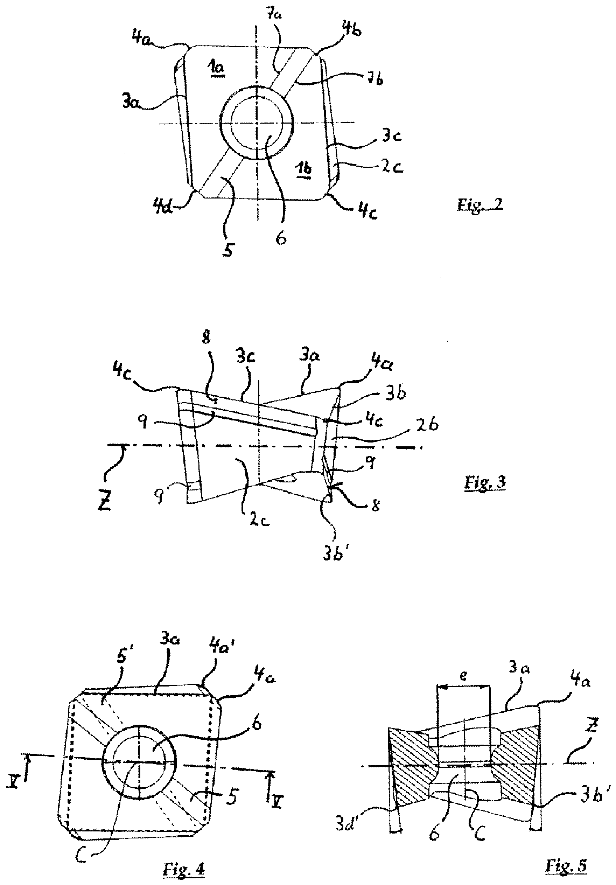

Ausgehend von einem in der Draufsicht rhombischen Körper, bei welchem die Ecken (4a, b, c, d bzw. 4a', b', c', d') der Oberseite und der Unterseite in der Draufsicht jeweils in Deckung mit den Ecken des Rhombus R_{z} gebracht werden, so dass alle Ecken und Kanten der Oberseite und der Unterseite in der Draufsicht auf die Ecken und gestrichelten Linie der Zwischenebene fallen, kann man sich die Erzeugung der konkreten geometrischen Form beispielsweise so vorstellen, dass man den Körper sowohl um die Diagonale d₁ als auch um die Diagonale d₂ des Rhombus z schraubenförmig verdrillt, wie durch Pfeile an den Enden der Diagonalen d₁ und d₂ angedeutet wird. Mit anderen Worten, die die Ecken 4a der Oberseite und 4a' der Unterseite verbindende Kante wird um die Achse bzw. Diagonale d₁ in eine erste Richtung gedreht und die diagonal gegenüberliegende Kante, welche die Ecke 4c der Oberseite und die Ecke 4c' der Unterseite verbindet, wird in die entgegengesetzte Richtung um die Achse d₁ gedreht. Analog wird der Körper auch um die Achse d₂ verdrillt, und zwar so, dass der Drehsinn der schraubenförmigen Verdrillung entgegengesetzt zu dem Drehsinn bezüglich der Achse d₁ ist. Anders gesprochen, verschiebt sich die Ecke 4a ausgehend von der zugehörigen Ecke des Rhombus z nach rechts und die Ecke 4c verschiebt sich um den gleichen Betrag von der Ecke des Rhombus bzw. der Diagonalen d₁ nach links, während die Verschiebungen auf der Unterseite gerade in die entgegengesetzte Richtung erfolgen. Die konkrete Wendeschneidplatte, die in den folgenden Figuren dargestellt ist, unterscheidet sich von dieser geometrischen Grundform nur durch leichte Abwandlungen, nämlich durch eine Abrundung der die Ecken 4a, 4a' und 4c, 4c' verbindenden Kanten und durch eine Abflachung bzw. Abschrägung der die Ecken 4b, 4b' und 4d, 4d' verbindenden Kante, und dadurch, dass zusätzlich die beiden dreieckigen Flächen 1a, 1b der Oberseite und der entsprechenden Flächen der Unterseite noch durch einen schmalen, ebenen Streifen 5, 5' voneinander getrennt sind, der in einer Ebene parallel zur Zwischenebene Z des Rhombus R_{z} liegt.
Eine Draufsicht auf eine solche reale Wendeschneidplatte erkennt man in Figur 2.
In Figur 2 sind nur noch die Ecken, Kanten und Flächen der Oberseite mit Bezugszahlen versehen.
Wie man sieht, sind die Ecken 4a und 4c gerundet und die Ecken 4b und 4d sind abgeflacht. Außerdem erstreckt sich quer über die Oberseite noch eine schmale, streifenförmige ebene Fläche 5, die parallel zu der erwähnten Zwischenebene Z liegt, die jedoch gegenüber einer die abgeflachten Ecken zentral verbindenden Linie noch etwas abgewinkelt ist. Die parallelen Seiten 7a, 7b der Dreiecksflächen 1a, 1b, die im Übrigen auch noch durch eine zentrale Bohrung 6 unterbrochen sind, bilden die beiden Ränder der ebenen Fläche 5. An diese streifenförmige, ebene Fläche 5 schließen demnach die beiden Dreiecksflächen 1a, 1b an, die, wie bereits erwähnt, aus der Papierebene heraus und relativ zueinander um einen Winkel von ca. 40° abgewinkelt sind, d.h. etwa einen Winkel von 140° dazwischen einschließen., wie man auch anhand der Figur 3 erkennen kann.

Im Zentrum der Wendeschneidplatte sind die Flächen 1a, 1b und 5 unterbrochen durch eine zentrale Befestigungsbohrung 6, deren Achse C sich senkrecht zu der gedachten Zwischenebene Z erstreckt, wobei die Ebene Z wiederum dadurch definiert ist, dass die Paare von Schneidecken 4a, 4a' und 4c, 4c' jeweils den gleichen Abstand zu der Zwischenebene haben und dass auch die Ecken 4b und 4b' sowie 4d und 4d' einen untereinander gleichen, jedoch gegenüber dem Abstand der Ecke 4a verschiedenen (konkret kleineren) Abstand zur Zwischenebene Z haben.

Wie man schon anhand der grundsätzlichen Konstruktion der Geometrie der Wendeschneidplatte gemäß Figur 1 erkennen kann, sind jeweils zwei gegenüberliegende Kanten, welche die Ecken 4a, 4d bzw. 4c, 4b miteinander verbinden, relativ lange Kanten (3a bzw. 3c), während die übrigen Kanten der Oberseite, nämlich diejenigen, welche die Ecken 4a und 4b bzw. 4c und 4d verbinden, kürzer ausgebildet sind. Umgekehrt sind an der Unterseite die den langen Kanten 3a, 3c gegenüberliegenden Kanten 3a' und 3c' kurze Kanten, während die dazwischen angeordneten Kanten 3b' und 3d' lange Kanten sind und damit Hauptschneidkanten bilden.

Dies gilt auch für die konkrete Wendeschneidplatte in den Figuren 2 bis 5, auch wenn die Abrundungen und Abschrägungen der Ecken die verbleibenden Kanten zusätzlich noch etwas verkürzen. Der Winkel zwischen Haupt- und Nebenschneidkante, die über eine abgerundete Schneidecke 4a, 4c bzw. 4a', 4c' ineinander übergehen, beträgt in dem dargestellten Ausführungsbeispiel in der Draufsicht etwa 82°. Der Radius der Schneidecke liegt zwischen 1 und 2 mm. Die abgeflachten Ecken 4b, b' und 4d, d' sind nicht für den Eingriff mit einem Werkstück vorgesehen. Die abgeflachten Ecken führen dazu, dass die Flächen 1a und 1b nicht exakt dreieckig sind, sondern eine abgeschnittene Ecke aufweisen. Dennoch bleiben die Flächen 1a und 1b im wesentlichen dreieckig und werden hier auch mit derart kleinen Abweichungen noch als dreieckige Flächen bezeichnet.

In Figur 3 erkennt man eine Seitenansicht der Wendeschneidplatte, welche einer Blickrichtung auf die Wendeschneidplatte der Figur 2 von rechts entspricht.

Wie man erkennt, weisen die Seitenflächen 2a, 2b, 2c und 2d jeweils angrenzend an eine Schneidkante eine gegenüber dem übrigen Teil der jeweiligen Seitenfläche leicht abgewinkelte Freifläche 8 auf, die zusätzlich noch durch eine flache, gerundete Nut 9 von dem übrigen Abschnitt der Teilfläche 2a, b, c, d abgesetzt ist. Durch die stärkere Neigung der Freifläche 8 gegen den übrigen Teil der Seitenfläche wird der positive Keilwinkel (Keilwinkel < 90°) noch etwas verstärkt, als er ohnehin auch ohne diese Abwinklung bereits wäre.
Figur 4 zeigt nochmals eine Draufsicht auf die Oberseite der Wendeschneidplatte in einer gegenüber Figur 2 um 90° gedrehten Position, wobei auch hier die Wendeschneidplatte wieder transparent dargestellt und die an sich verdeckten Kanten gestrichelt wiedergegeben sind. In dieser Darstellung erkennt man, dass die Längsrichtung der ebenen Fläche 5 gegenüber einer Diagonalen zwischen den entsprechenden Ecken in ihrer Längsausichtung zusätzlich etwas geneigt ist. Beide Flächen 5, 5' verlaufen jedoch parallel zur Zwischenebene Z, die in Figur 3 durch eine horizontale, strichpunktierte Linie wiedergegeben ist, und die in den Figuren 2 und 4 der Papierebene entspricht.
Figur 5 zeigt schließlich noch einen Schnitt durch die erfindungsgemäße Wendeschneidplatte entlang der Linie V-V in Figur 4. Auch hier ist die Lage der Zwischenebene Z durch eine strichpunktierte Linie wiedergegeben. Die Dicke der Wendeschneidplatte beträgt im Bereich der Schneidecken (gemessen senkrecht zur Zwischenebene) zwischen etwa 6 und 12 mm und die Dicke im Bereich der abgeflachten Ecken etwa 40 bis 70% der Dicke im Bereich der Schneidecken 4a, 4a', 4c, 4c'.
Wie man sieht, erstreckt sich eine zentrale Bohrung 6 senkrecht zur Zwischenebene Z und von der Oberseite bis zur Unterseite der Wendeschneidplatte. Die Bohrung 6 ist bezüglich einer Drehung um 180° um eine der Diagonalen d1 und d2, wie sie bezüglich Figur 1 definiert wurden, symmetrisch.

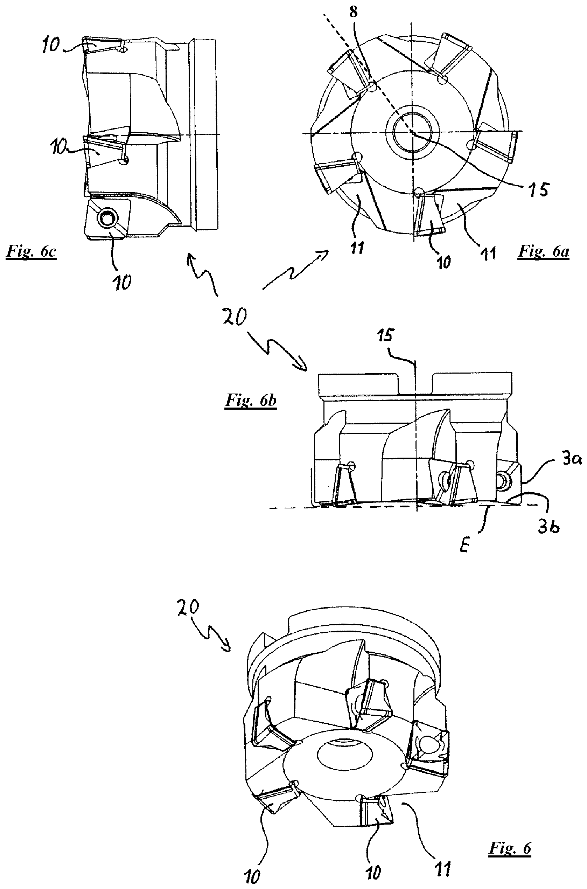

Figur 6 zeigt einen mit entsprechenden Wendeschneidplatten bestückten Fräser in einer perspektivischen Ansicht und die Figuren 6a bis c zeigen denselben Fräser in einer stirnseitigen Draufsicht und zwei um 90° gegeneinander versetzten Seitenansichten.
Entsprechend der Anordnung der Wendeschneidplatten 10 an diesem Fräser handelt es sich dabei um einen Eckfräser 20, der fünf Sitze und darin entsprechend angeordnete Wendeschneidplatten 10 zeigt. Die Wendeschneidplatten sind dabei so ausgerichtet, dass jeweils eine der Hauptschneidkanten 3a, 3c bzw. 3b' oder 3d' in etwa achsparallel an der Peripherie des Eckfräsers angeordnet ist und jeweils an die Schneidecken 4a, 4c bzw. 4a' und 4c' angrenzenden Nebenschneidkanten (3b, 3d, 3a' bzw. 3c' unter einem leichten Freiwinkel gegenüber einer zur Rotationsachse 15 senkrechten Ebene E geneigt verlaufen.

Vor allem anhand der stirnseitigen Ansicht der Figur 6a erkennt man, dass sich dabei eine positive Schneidengeometrie für die Hauptschneidkanten mit einem positiven Spanwinkel γ ergibt, da die Spanfläche in Rotationsrichtung jeweils hinter der Hauptschneidkante folgt.

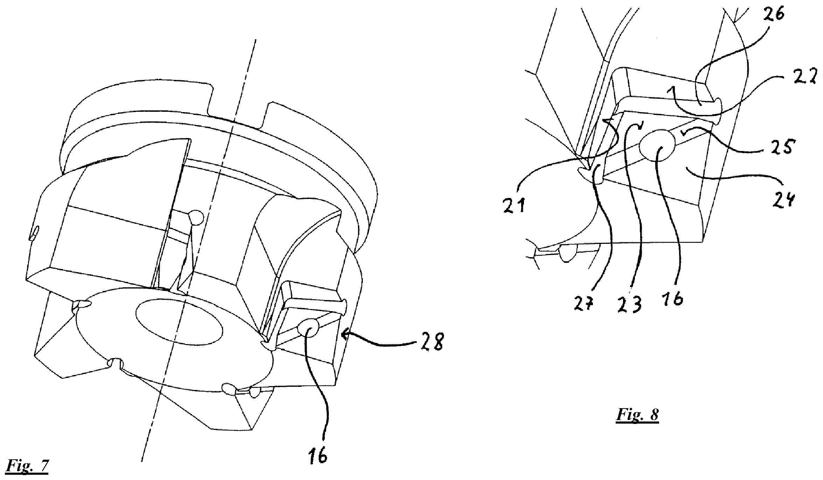

Figur 7 zeigt noch einmal einen entsprechenden Fräser, allerdings ohne Wendeschneidplatten, in einer perspektivischen Ansicht und Figur 8 ist ein vergrößerter Ausschnitt aus Figur 7.

Wie man erkennt, weist ein Sitz 28 für eine entsprechende Wendeschneidplatte eine radiale Anlage- und Stützfläche 21, eine axiale Anlagefläche 22, sowie drei überwiegend in Umfangsrichtung stützende Sitzflächen 23, 24 und 25 auf, wobei jeweils mindestens eine der Flächen 23 und 24 als Auflagefläche für jeweils mindestens eine der dreieckigen Teilflächen 1a, 1b (bzw. 1'a, 1'b) dient. Die Flächen 21 und 22 treten jeweils in Kontakt mit den Seitenflächen 2c und 2d, wenn die aktive Hauptschneidkante die Kante 3a ist.

Am Übergang zwischen den Anlageflächen 21 und 22 sowie zu der Fläche 23 hin erkennt man jeweils Freistiche 26, 27, welche die Kanten einer Wendeschneidplatte 10 berührungslos aufnehmen. Eine Gewindebohrung 16 ist zentral in der Fläche 25 angeordnet und erfasst auch die Flächen 23 und 24.

Wie man anhand der Figuren 6 bis 8 erkennen kann, bietet ein entsprechender Sitz 28 eines Eckfräsers 20 große und zueinander abgewinkelte Anlageflächen für die komplementären Flächen der Wendeschneidplatte 10 und insbesondere die der Hauptschneidkante gegenüberliegende Fläche 24 stützt die Wendeschneidplatte und deren jeweils aktive Schneidkante sicher und großflächig ab.

Die erfindungsgemäße Wendeschneidplatte hat vier gleichwertige, als Hauptschneidkanten auszurichtende Schneidkanten, die auf derselben Seite (Oberseite bzw. Unterseite) paarweise einander gegenüberliegen, sodass die Schneidkanten keine gemeinsam verwendeten Ecken aufweisen, sodass eine Hauptschneidkante nach dem Wenden bzw. Indexieren einschließlich ihrer Ecken jeweils unbenutzt ist. Die Hauptschneidkanten der Oberseite liegen dabei gegenüber den Nebenschneidkanten der Unterseite und umgekehrt. D. h. jede der Teilflächen 2a, 2b, 2c und 2d bildet entweder mit der Oberseite oder mit der Unterseite eine Hauptschneidkante und mit der jeweils anderen Seite eine Nebenschneidkante. Gleichzeitig haben Haupt- und Nebenschneidkanten jeweils eine positive Schneidgeometrie und sind großflächig und sicher auf der gegenüberliegenden Seite abgestützt. Nicht aktive Schneidkanten sind jeweils gut geschützt im Sitz des Fräsers aufgenommen

Die erfindungsgemäße Wendeschneidplatte ist damit besonders gut geeignet für Hochleistungseckfräser.

## Patentansprüche

1. Wendeschneidplatte (10) mit einer Oberseite (1) und einer Unterseite (1'), welche durch eine aus mehreren Teilflächen (2a, b, c, d) bestehende, umlaufende Seitenfläche miteinander verbunden sind, wobei mindestens ein Teil der Schnittlinien zwischen den Teilflächen (2a, b, c, d) und der Ober- bzw. der Unterseite äquivalente Schneidkanten (3 a, b, c, d) bilden, die Wendeschneidplatte jeweils in der Draufsicht auf die Ober- und die Unterseite (1, 1') die Form eines nicht rechtwinkligen Parallelogramms mit nahezu rhombischer Grundform und eine gedachte Zwischenebene (Z) hat, welche durch vier Ecken eines gedachten Rhombus aufgespannt wird, dessen Seiten (z1, z2, z3, z4) im Abstand zu Ober- und Unterseite entlang der umlaufenden Seitenfläche in einer Ebene derart verlaufen, dass jede der äquivalenten Schneidkanten (3a, c; 3b', d') der Oberseite und Unterseite dieselbe Variation des Abstandes und Winkels zur Zwischenebene (Z) hat, wobei zwei einander diagonal gegenüber liegende Ecken (4a, 4c) der Oberseite und zwei diagonal gegenüber liegenden Ecken der Unterseite (4a', 4c') jeweils einen größeren Abstand (D) von der Zwischenebene (Z) haben als die jeweils dazwischen liegenden einander diagonal gegenüber liegenden Ecken (4b, 4d; 4b', 4d') der Ober- und der Unterseite, wobei die einander diagonal gegenüberliegenden Ecken (4 a, b, c, d) der Oberseite ebenso wie die einander diagonal gegenüberliegenden Ecken (4a', b', c', d') der Unterseite parallel zur Zwischenebene (Z) und in der Draufsicht auf die Zwischenebene jeweils weg von der zugehörigen Diagonalen (d1, d2) des die Zwischenebene aufspannenden Rhombus in zueinander entgegengesetzte Richtungen verschoben sind und wobei der die Zwischenebene (Z) definierende Rhombus, der von entlang der umlaufenden Seitenfläche verlaufenden Seiten (z₁, z₂, z₃, z₄) aufgespannt wird, nicht rechtwinklig ist und vorzugsweise an seinen spitzwinkligen Ecken einen Winkel zwischen 60° und 88° aufweist, **dadurch gekennzeichnet, dass** die Oberseite und die Unterseite jeweils durch zwei im Wesentlichen dreieckige Flächen (1a, b) gebildet werden, deren eine Spitze jeweils mit der spitzwinkligen Ecke der parallelogrammförmigen Ober- bzw. Unterseite zusammenfällt, wobei die dieser Spitze gegenüber liegenden Seiten der dreieckigen Flächen parallel verlaufen und sich in etwa zwischen den stumpfwinkligen Ecken der Parallelogrammform erstrecken und wobei diese Dreiecksflächen einen Winkel zwischen etwa 110 und 165°, vorzugsweise zwischen 135 und 155° einschließen.

2. Wendeschneidplatte nach Anspruch 1, **dadurch gekennzeichnet, dass** auf der Oberseite ebenso wie auf der Unterseite je eine schmale, parallel zur Zwischenebene ausgerichtete Planfläche (5) zwischen den parallelen Seiten der Dreiecksflächen (1a, 1b) verläuft.

3. Wendeschneidplatte nach einem der vorstehenden Ansprüche, **dadurch gekennzeichnet, dass** in der Draufsicht auf die Ober- bzw. Unterseite zwei diagonal gegenüberliegende Ecken bezüglich der zugehörigen Diagonalen (d₁) des Rhombus im Uhrzeigersinn verschoben sind und die dazwischen liegenden Ecken bezüglich der zugehörigen Diagonalen (d₂) entgegen dem Uhrzeigersinn verschoben sind, wodurch die rhombische Grundform von Ober- und Unterseite zu einer Parallelogrammform mit unterschiedlich langen Seiten verzerrt ist.

4. Wendeschneidplatte nach Anspruche 3, **dadurch gekennzeichnet, dass** die Schneidkanten (3a, c; 3b', d') jeweils entlang der langen Seiten der Parallelogrammform ausgebildet sind.

5. Wendeschneidplatte nach einem der vorstehenden Ansprüche, **dadurch gekennzeichnet, dass** Schneidecken (4a, 4a'; 4c, 4c') der Wendeschneidplatte an den spitzwinkligen Ecken des Parallelogramms den größeren Abstand von der Zwischenebene (Z) haben.

6. Wendeschneidplatte nach einem der vorstehenden Ansprüche, **dadurch gekennzeichnet, dass** die Senkrecht zur Zwischenebene (Z) gemessene Dicke der Schneidplatte zwischen Ober- und Unterseite im Bereich der stumpfwinkligen Ecken zwischen 40 und 70 % und bevorzugt in etwa die Hälfte der Dicke an den spitzwinkligen Ecken beträgt.

7. Wendeschneidplatte nach einem der vorstehenden Ansprüche, **dadurch gekennzeichnet, dass** die Seitenfläche im Wesentlichen aus vier Teilflächen (2a, b, c, d) besteht und dass jede der Teilflächen entlang einer Schneidkante eine sich nur über einen schneidkantennahen Abschnitt der Teilfläche (2a, b, c, d) erstreckende Freifläche (8) aufweist, die einen kleineren Keilwinkel (κ) mit der Ober- bzw. Unterseite einschließt als der verbleibende Abschnitt der Teilfläche,

8. Wendeschneidplatte nach einem der vorstehenden Ansprüche, **dadurch gekennzeichnet, dass** die Dreiecksflächen von Ober- und Unterseite sowie die Schneidkanten definierenden Teilflächen der Seitenflächen, sowie die Freiflächen allesamt nicht parallele Flächen sind.

9. Wendeschneidplatte nach einem der vorstehenden Ansprüche, **dadurch gekennzeichnet dass** die spitzwinkligen Ecken und/oder die stumpfwinkligen Ecken der Wendeschneidplatte abgeflacht oder gerundet sind dass die Ober- und Unterseite je zwei Schneidkanten aufweisen, von denen eine erste sich zwischen einer stumpfwinkligen und einer spitzwinkligen Ecke erstreckt, und die zweite sich zwischen den hierzu diagonal gegenüber liegenden Ecken erstreckt.

10. Wendeschneidplatte nach einem der vorstehenden Ansprüche, **dadurch gekennzeichnet, dass** die Wendeschneidplatte punktsymmetrisch und auch symmetrisch bezüglich 180°-Drehungen um beide Diagonalen (d₁, d₂) des Rhombus der Zwischenebene (Z) und um eine zentrale Achse (C) durch den Rhombus senkrecht zur Zwischenebene ist.

11. Wendeschneidplatte nach einem der vorstehenden Ansprüche, **dadurch gekennzeichnet, dass** die Wendeschneidplatte keine Spiegelsymmetrie bezüglich irgendeiner Ebene und keine Symmetrie bezüglich irgendeiner Drehung aufweist, die kein ganzzahliges Vielfaches von 180° ist.

12. Eckfräser (20) mit mehreren Aufnahmeaussparungen für Wendeschneidplatten (WSP), die jeweils mindestens 3 Sitzflächen aufweisen, von denen eine erste Sitzfläche (21) eine Abstützung einer WSP überwiegend in radialer Richtung, eine zweite Sitzfläche (22) eine Abstützung in überwiegend in axialer Richtung und eine dritte Sitzfläche (23, 24, 25) eine Abstützung der WSP überwiegend in tangentialer Richtung bewirkt, **wobei** die dritte Sitzfläche aus mindestens zwei zueinander abgewinkelten Teilflächen (23, 24) besteht, von denen eine mit der Achse des Eckfräsers (20) einen positiven axialen Winkel und
die andere einen negativen axialen Winkel einschließt,
**dadurch gekennzeichnet, dass** die Teilflächen (23, 24) in etwa dreieckig sind und in der tangentialen Draufsicht gemeinsam eine Parallelogrammform mit annähernd rhombischer Grundform definieren, indem zwei ihrer Seiten parallel nebeneinander verlaufen und die Dreieckflächen durch eine schmale, längliche Planfläche getrennt sind, die in etwa achsparallel ausgerichtet ist und deren Längsseiten mit den parallelen Seiten der Dreiecksflächen zusammenfallen

13. Eckfräser nach Anspruch 12, **dadurch gekennzeichnet, dass** die Teilflächen zusätzlich auch bezüglich der radialen Richtung in entgegengesetzte Richtung um einen Winkel abgewinkelt sind wobei die parallelen Seiten der beiden Dreiecksflächen (23, 24) unter einen Winkel zwischen 35 und 60 Grad zur Fräserachse geneigt sind **gekennzeichnet, dass**

14. Eckfräser nach Anspruch 12 oder 13, **dadurch gekennzeichnet, dass** die Dreiecksflächen (23, 24) einen Winkel zwischen etwa 110° und etwa 165° vorzugsweise zwischen 135 und 155° miteinander einschließen.

15. Eckfräser nach Anspruch 12 oder einem der darauf rückbezogenen Ansprüche, **dadurch gekennzeichnet, dass** eine Befestigungsbohrung sich zwischen den Dreiecksflächen im Bereich der parallelen Seiten bzw. der Planfläche in etwa tangential zur Fräserachse in die dritte Sitzfläche hinein erstreckt.

16. Eckfräser nach Anspruch 12 oder einem der darauf rückbezogenen Ansprüche, **dadurch gekennzeichnet, dass** er mit mehreren Wendeschneidplatten nach einem der Ansprüche 1 - 15 ausgestattet ist.

## Claims

1. An indexable insert (10) having a top side (1) and an underside (1') which are connected together by a peripherally extending side surface comprising a plurality of surface portions (2a, b, c, d), wherein at least a part of the intersection lines between the surface portions (2a, b, c, d) and the top side and the underside, respectively, form equivalent cutting edges (3a, b, c, d), the indexable insert in a plan view onto both, the top side and the underside (1, 1'), is in the shape of a non-rectangular parallelogram with an almost rhombic basic shape and has a notional intermediate plane (Z) which is spanned by four corners of a notional rhombus, whose sides (z1, z2, z3, z4) extend at a spacing relative to the top side and the underside along the peripherally extending side surface in a plane in such a way that each of the equivalent cutting edges (3a, c; 3b', d') of the top side and the underside has the same variation in spacing and angle relative to the intermediate plane (Z), wherein two mutually diagonally opposite corners (4a, 4c) of the top side and two corresponding diagonally opposite corners of the underside (4a', 4c') are at a greater spacing (D) from the intermediate plane (Z) than the respective interposed mutually diagonally opposite corners (4b, 4d; 4b', 4d') of the top side and the underside, wherein the mutually diagonally opposite corners (4a, b, c, d) of the top side as well as the mutually diagonally opposite corners (4a', 4b', 4c', 4d') of the underside are displaced in parallel relationship with the intermediate plane (Z) and in the plan view onto the intermediate plane, in mutually opposite directions away from the associated diagonal (d1, d2) of the rhombus spanning the intermediate plane, and wherein
the rhombus which defines the intermediate plane (Z) and which is spanned by sides (z₁, z₂, z₃, z₄) extending along the peripherally extending side surface is non-rectangular and includes at its acute-angled corners an angle of between 60° and 88°, **characterized in that** the top side and the underside are respectively formed by two substantially triangular surfaces (1a, b) of which a respective tip coincides with the acute-angled corner of the parallelogram-shaped top side and underside, respectively, wherein the sides of the triangular surfaces, that are opposite of said tip, extend parallel to each other and extend approximately between the obtuse-angled corners of the parallelogram shape and wherein said triangular surfaces include an angle of between about 110 and 165°, preferably between 135 and 155°.

2. An indexable insert according to claim 1 **characterised in that** extending on the top side and on the underside is a respective narrow planar surface (5) oriented parallel to the intermediate plane between the parallel sides of the triangular surfaces (1a, 1b).

3. An indexable insert according to one of the preceding claims **characterised in that** in the plan view onto the top side and the underside respectively two diagonally opposite corners are displaced in the clockwise direction with respect to the associated diagonal (d₁) of the rhombus and the corners therebetween are displaced in the anti-clockwise direction with respect to the associated diagonal (d₂), whereby the rhombic basic shape of the top side and the underside is distorted to give a parallelogram shape with sides of different lengths.

4. An indexable insert according to claim 3 **characterised in that** the cutting edges (3a, c; 3b', b') are respectively provided along the long sides of the parallelogram shape.

5. An indexable insert according to one of the preceding claims **characterised in that** cutting corners (4a, 4a'; 4c, 4c') of the indexable insert are at a greater spacing from the intermediate plane (Z) at the acute-angled corners of the parallelogram.

6. An indexable insert according to one of the preceding claims **characterised in that** the thickness of the insert as measured perpendicularly to the intermediate plane (Z) between the top side and the underside in the region of the obtuse-angled corners of said rhombus is between 40 and 70 % and preferably approximately half the thickness at the acute-angled corners thereof.

7. An indexable insert according to one of the preceding claims **characterised in that** the side surface substantially comprises four surface portions (2a, b, c, d) and that each of the surface portions along a cutting edge has a relief surface (8) which extends only over a portion, near the cutting edge, of the surface portion (2a, b, c, d), the relief surface (8) including a smaller wedge angle (κ) with the top side and the underside respectively than the remaining portion of the surface portion.

8. An indexable insert according to one of the preceding claims, **characterised in that** the triangular surfaces of the top side and the underside as well as the surface portions of the side surfaces, that define cutting edges, as well as any relief surfaces are all non-parallel surfaces.

9. An indexable insert according to one of the preceding claims, **characterised in that** the acute-angled corners and/or the obtuse-angled corners of the indexable insert are flattened or rounded, and the top side and the underside each have two cutting edges of which a first extends between an obtuse-angled and an acute-angled corner and the second extends between the corners disposed in diagonally opposite relationship therewith.

10. An indexable insert according to one of the preceding claims, **characterised in that** the indexable insert is point-symmetrical and also symmetrical in relation to 180° rotations about both diagonals (d₁, d₂) of the rhombus of the intermediate plane (Z) and about a central axis (C) through the rhombus perpendicularly to the intermediate plane.

11. An indexable insert according to one of the preceding claims, **characterised in that** the indexable insert has no mirror symmetry in relation to any plane and no symmetry in relation to any rotation which is not an integral multiple of 180°.

12. A shoulder milling cutter (20) having a plurality of mounting cutouts for indexable inserts (II) which respectively have at least 3 seat surfaces of which a first seat surface (21) provides a support for an Insert (II) predominantly in a radial direction, a second seat surface (22) provides a support predominantly in an axial direction and a third seat surface (23, 24, 25) provides a support for the insert (II) predominantly in the tangential direction, wherein the third seat surface comprises at least two mutually angled surface portions (23, 24) of which one includes a positive axial angle with the axis of the shoulder milling cutter (20) and the other includes a negative axial angle, **characterised in that** the surface portions (23, 24) are approximately triangular and in a tangential plan view jointly define a parallelogram shape with an approximately rhombic basic shape insofar as two of their sides extend in parallel mutually juxtaposed relationship, and the triangular surfaces are separated by a narrow elongate planar surface which is oriented in substantially parallel relationship with the axis and whose longitudinal sides coincide with the parallel sides of the triangular surfaces.

13. A shoulder milling cutter according to claim 12 **characterised in that** the surface portions are additionally also angled with respect to the radial direction through an angle in the opposite direction, wherein the parallel sides of the two triangular surfaces (23, 24) are inclined at an angle of between 35 and 60° relative to the milling cutter axis.

14. A shoulder milling cutter according to claim 12 or 13 **characterised in that** the triangular surfaces (23, 24) include an angle of between about 110° and about 165°, preferably between 135 and 155°, with each other.

15. A shoulder milling cutter according to claim 12 or one of the claims dependent thereon **characterised in that** a fixing bore extends between the triangular surfaces in the region of the parallel sides or of the planar surface in approximately tangential relationship with the milling cutter axis into the third seat surface.

16. A shoulder milling cutter according to claim 12 or one of the claims dependent thereon **characterised in that** it is equipped with a plurality of indexable inserts according to one of claims 1 to 15.

## Revendications

1. Plaquette de coupe réversible (10) avec une face supérieure (1) et une face inférieure (1') qui sont reliées l'une à l'autre par une face latérale périphérique constituée de plusieurs surfaces partielles (2a, b, c, d), au moins une partie des lignes de coupe entre les surfaces partielles (2a, b, c, d) et respectivement la face supérieure et la face inférieure formant des bords de coupe (3a, b, c, d) équivalents, la plaquette de coupe réversible présentant, en une vue de dessus respectivement sur la face supérieure et la face inférieure (1, 1'), la forme d'un parallélogramme non rectangle à forme de base quasiment rhomboïdale et un plan intermédiaire imaginé (Z) qui s'étend entre quatre coins d'un losange imaginé dont les côtés (z1, z2, z3, z4) s'étendent, à une distance de la face supérieure et de la face inférieure, le long des faces latérales périphériques dans un plan de façon telle que chacun des bords de coupe équivalents (3a, c ; 3b', d') de la face supérieure et de la face inférieure présente la même variation de la distance et de l'angle par rapport au plan intermédiaire (Z), deux coins (4a, 4c) diagonalement opposés l'un à l'autre de la face supérieure et deux coins (4a', 4c') diagonalement opposés l'un à l'autre de la face inférieure présentant chacun une distance (D) plus grande du plan intermédiaire (Z) que les coins (4b, 4d ; 4b', 4d') respectifs de la face supérieure et de la face inférieure situés entre ces derniers et opposés diagonalement l'un à l'autre, les coins diagonalement opposés l'un à l'autre (4a, b, c, d) de la face supérieure tout comme les coins diagonalement opposés l'un à l'autre (4a', b', c', d') de la face inférieure étant décalés parallèlement au plan intermédiaire (Z) et, en une vue de dessus sur le plan intermédiaire, en s'éloignant de la diagonale (d1, d2) correspondante du losange formant le plan intermédiaire, dans des directions opposées l'une à l'autre, et le losange définissant le plan intermédiaire (Z), qui s'étend entre des côtés (z1, z2, z3, z4) s'étendant le long de la face latérale périphérique, n'étant pas rectangulaire et présentant de préférence à ses coins à angle aigu un angle entre 60° et 88°, **caractérisée en ce que** la face supérieure et la face inférieure sont formées chacune par deux surfaces sensiblement triangulaires (1a, b) dont une pointe coïncide avec le coin à angle aigu respectivement de la face supérieure en forme de parallélogramme et de la face inférieure en forme de parallélogramme, les côtés des surfaces triangulaires situés à l'opposé de cette pointe s'étendant parallèlement l'une à l'autre et approximativement entre les coins à angle obtus de la forme de parallélogramme, ces surfaces triangulaires enfermant un angle entre environ 110° et 165°, de préférence entre 135° et 155°.

2. Plaquette de coupe réversible selon la revendication 1, **caractérisée en ce qu'**il s'étend entre les côtés parallèles les surfaces triangulaires (1a, 1b), sur la face supérieure tout comme sur la face inférieure, une surface plane (5) mince respective orientée parallèlement au plan intermédiaire.

3. Plaquette de coupe réversible selon l'une des revendications précédentes, **caractérisée en ce que**, en une vue de dessus respectivement sur la face supérieure et sur la face inférieure, deux coins diagonalement opposés sont décalés dans le sens des aiguilles de la montre par rapport aux diagonales (d₁) correspondantes du losange et que les coins situés entre ces derniers sont décalés dans le sens contraire des aiguilles de la montre par rapport aux diagonales (d₂) correspondantes, ce par quoi la forme de base rhomboïdale des faces supérieure et inférieure est déformée en une forme de parallélogramme ayant des côtés de longueurs différentes.

4. Plaquette de coupe réversible selon la revendication 3, **caractérisée en ce que** les bords de coupe (3a, c ; 3b', d') sont formés chacun le long des côtés longs de la forme de parallélogramme.

5. Plaquette de coupe réversible selon l'une des revendications précédentes, **caractérisée en ce que** des coins de coupe (4a, 4a' ; 4c, 4c') de la plaquette de coupe réversible présentent la distance plus grande du plan intermédiaire (Z) aux coins à angle aigu du parallélogramme.

6. Plaquette de coupe réversible selon l'une des revendications précédentes, **caractérisée en ce que** l'épaisseur de la plaquette de coupe, mesurée perpendiculairement au plan intermédiaire (Z), entre la face supérieure et la face inférieure dans la zone des coins à angle obtus, est entre 40 et 70 %, et de préférence environ la moitié, de l'épaisseur aux coins à angle aigu.

7. Plaquette de coupe réversible selon l'une des revendications précédentes, **caractérisée en ce que** la face latérale est constituée essentiellement de quatre surfaces partielles (2a, b, c, d) et **en ce que** chacune des surfaces partielles comprend une surface libre (8) s'étendant le long d'un bord de coupe et sur une zone de la surface partielle (2a, b, c, d) proche du bord de coupe qui enferme, respectivement avec la face supérieure et la face inférieure, un angle de coin (k) plus petit que la zone restante de la surface partielle.

8. Plaquette de coupe réversible selon l'une des revendications précédentes, **caractérisée en ce que** les surfaces triangulaires respectivement de la face supérieure et de la face inférieure ainsi que les surfaces partielles des faces latérales définissant des bords de coupe ainsi que les surfaces libres sont toutes des surfaces non parallèles.

9. Plaquette de coupe réversible selon l'une des revendications précédentes, **caractérisée en ce que** les coins à angle aigu et/ou les coins à angle obtus de la plaque de coupe réversible sont aplatis ou arrondis, que la face supérieure et la face inférieure comprennent chacune deux bords de coupe dont un premier s'étend entre un coin à angle obtus et un coin à angle aigu et le second s'étend entre les coins respectivement diagonalement opposés.

10. Plaquette de coupe réversible selon l'une des revendications précédentes, **caractérisée en ce que** la plaquette de coupe réversible est à la fois symétrique par rapport à un point et symétrique par rapport à des rotations à 180° autour des deux diagonales (d₁, d₂) du losange du plan intermédiaire (Z) et autour d'un axe central (C) passant par le losange perpendiculairement au plan intermédiaire (Z).

11. Plaquette de coupe réversible selon l'une des revendications précédentes, **caractérisée en ce que** la plaquette de coupe ne présente pas de symétrie spéculaire par rapport à un quelconque plan ni une symétrie par rapport à une quelconque rotation qui serait un multiple entier de 180°.

12. Fraise à dresser (20) comprenant plusieurs évidements de logement pour plaquettes de coupe réversibles (WSP), qui comprennent chacun au moins trois surfaces d'appui dont une première surface d'appui (21) a pour effet un support d'une WSP essentiellement dans une direction radiale, une deuxième surface d'appui (22) un support essentiellement dans une direction axiale et une troisième surface d'appui (23, 24, 25) un support de la WSP essentiellement dans une direction tangentielle, la troisième surface d'appui consistant en au moins deux surfaces partielles (23, 24) enfermant entre elles un angle, dont l'une enferme avec l'axe de la fraise à dresser (20) un angle axial positif et l'autre enferme un angle axial négatif, **caractérisée en ce que** les surfaces partielles (23, 24) présentent une forme approximativement triangulaire et définissent ensemble, en une vue de dessus tangentielle, une forme de parallélogramme avec une forme de base approximativement rhomboïde dans la mesure où deux de leurs côtés s'étendent parallèlement l'un à côté de l'autre et que les surfaces triangulaires sont séparées par une surface de plan allongée mince qui est orientée approximativement parallèlement à l'axe et dont les côtés longitudinaux coïncident avec les côtés parallèles des surfaces triangulaires.

13. Fraise à dresser selon la revendication 12, **caractérisée en ce que** les surfaces partielles enferment entre elles un angle, en des directions opposées, également par rapport à la direction radiale, les côtés parallèles des deux surfaces triangulaires (23, 24) étant inclinés d'un angle entre 35 et 60 degrés par rapport à l'axe de la fraise.

14. Fraise à dresser selon la revendication 12 ou 13, **caractérisée en ce que** les surfaces triangulaires (23, 24) enferment entre elles un angle entre environ 110° et environ 165°, de préférence entre 135° et 155°.

15. Fraise à dresser selon la revendication 12 ou l'une des revendications rattachées à celle-ci, **caractérisée en ce qu'**un alésage de fixation s'étend entre les surfaces triangulaires dans la zone des côtés parallèles ou respectivement de la surface de plan, approximativement en direction tangentielle par rapport à l'axe de la fraise, jusque dans la troisième surface d'appui.

16. Fraise à dresser selon la revendication 12 ou l'une des revendications rattachées à celle-ci, **caractérisée en ce qu'**elle est équipée de plusieurs plaquettes de coupe réversibles selon l'une des revendications 1 à 15.
